# EUROPÄISCHE PATENTSCHRIFT

(11) **EP 2 490 911 B1**
(45) Veröffentlichungstag und Bekanntmachung des Hinweises auf die Patenterteilung: **30.04.2014**
(21) Anmeldenummer: 10768914.3
(22) Anmeldetag: 12.10.2010
(51) Int. Cl.: B60K 7/00, B60K 6/405, B60K 1/02, B60K 6/365

(54) **ELEKTRISCHE ACHSE EINES KRAFTFAHRZEUGES**
ELECTRIC AXLE OF A MOTOR VEHICLE
ESSIEU ÉLECTRIQUE D'UN VÉHICULE À MOTEUR

(30) Priorität: 20.10.2009 DE 202009014189 U
(43) Veröffentlichungstag der Anmeldung: 29.08.2012
(73) Patentinhaber: GETRAG Getriebe- und Zahnradfabrik Hermann Hagenmeyer GmbH & Cie KG, 74199 Untergruppenbach (DE)
(72) Erfinder: KNOBLAUCH, Daniel, 74199 Untergruppenbach (DE); KNOEDEL, Ulrich, 74379 Ingersheim (DE)
(74) Vertreter: Witte, Weller & Partner Patentanwälte mbB
(86) Internationale Anmeldenummer: PCT/EP2010/065238
(87) Internationale Veröffentlichungsnummer: WO 2011/047985

(56) Entgegenhaltungen:
- EP-A2- 1 354 744
- WO-A2-2007/118082
- US-A- 5 751 081

## Beschreibung

Die vorliegende Erfindung betrifft eine elektrische Achse gemäß dem Oberbegriff des Anspruchs 1.

Die vorliegende Erfindung betrifft generell eine elektrische Maschinenanordnung für eine elektrische Achse eines Kraftfahrzeugs, mit einer elektrischen Maschine, die über ein Getriebe mit wenigstens einer Antriebswelle verbunden ist, die mit einem angetriebenen Rad des Kraftfahrzeugs verbindbar ist, und mit einem Maschinengehäuse, wobei die elektrische Maschine einen gehäusefesten Stator und einen Rotor aufweist, der mit einem Eingangsglied des Getriebes verbunden ist.

Ferner betrifft die vorliegende Erfindung generell eine elektrische Achse für ein Kraftfahrzeug, mit zwei im Wesentlichen spiegelbildlich zueinander angeordneten elektrischen Maschinenanordnungen der oben genannten Art.

Auf dem Gebiet der Kraftfahrzeugtechnik besteht ein Trend hin zu elektrischen Antrieben. Hierbei ist es bekannt, einen Verbrennungsmotor mit einer elektrischen Maschine zu kombinieren. Derartige Hybrid-Antriebseinheiten können so ausgelegt sein, dass die elektrische Maschine nur bestimmte Zusatzfunktionen leistet (sogenannter mild Hybrid). Auch ist es möglich, eine Hybrid-Antriebseinheit so zu konstruieren, dass sowohl ein elektrischer als auch ein Betrieb mit Verbrennungsmotor möglich sind.

Daneben sind für Kraftfahrzeuge auch reine elektrische Antriebe bekannt, so dass das Kraftfahrzeug überhaupt keinen Verbrennungsmotor mehr aufweist.

Ferner sind sogenannte elektrische Achsen bekannt, bei denen eine Achse des Kraftfahrzeuges rein elektrisch angetrieben wird. Derartige elektrische Achsen können in einem Kraftfahrzeug als alleinige Antriebsachse eingebaut werden. Alternativ ist es möglich, eine derartige elektrische Achse als zweite angetriebene Achse vorzusehen, wobei eine erste angetriebene Achse in der Regel durch eine Antriebseinheit mit herkömmlichem Verbrennungsmotor angetrieben wird. In diesem Fall kann mittels der elektrischen Achse ein Vierrad-Antrieb realisiert werden. Alternativ ist es auch möglich, in einem Kraftfahrzeug zu diesem Zweck zwei elektrische Achsen vorzusehen.

Die elektrischen Achsen können so aufgebaut sein, dass eine elektrische Maschinenanordnung mit einem mechanischen Differential kombiniert wird. Ferner sind sogenannte Tandemantriebe bekannt, bei denen die elektrische Achse zwei elektrische Maschinenanordnungen aufweist, die jeweils einem der angetriebenen Räder der Achse zugeordnet sind. In diesem Fall ist ein mechanisches Differential nicht notwendig. Die Differentialfunktion wird durch eine geeignete Ansteuerung der elektrischen Maschinen realisiert.

Für Großserienanwendungen ist der Kostenaspekt hierbei von besonderer Bedeutung. Neben der Art und Auswahl der elektrischen Maschine und des Getriebes ist hierbei auch die Art der Ausbildung des Gehäuses und der Lagerung ein wichtiger Parameter.

Aus dem gattungsgemäßen Dokument EP 1 354 744 A2 ist eine Achse für ein Kraftfahrzeug mit einem mechanischen Differential und einer elektrischen Maschine bekannt, die eine hohle Rotorwelle aufweist, die koaxial außerhalb von einer Achswelle angeordnet ist.

Das Dokument US 5,751,081 A offenbart eine weitere elektrische Achse mit einer oder zwei elektrischen Maschinen und einem mechanischen Differential.

Schließlich offenbart das Dokument WO 2007/118082 A2 eine elektrische Achse mit einem elektrischen Motor.

Vor diesem Hintergrund ist es die Aufgabe der Erfindung, eine elektrische Achse anzugeben, die kostengünstig realisierbar ist.

Diese Aufgabe wird gelöst durch eine elektrische Achse mit den Merkmalen des Anspruchs 1.

Durch die Maßnahme, den Rotor mittels eines ersten und eines zweiten Rotorlagerabschnittes zu lagern, wobei eine Maschinenausgangswelle durch den zweiten Rotorlagerabschnitt berührungsfrei hindurchgeführt ist, kann eine erhebliche Reduktion der erforderlichen Lager zum Lagern der Antriebs- bzw. Getriebekomponenten realisiert werden. Hierdurch ergibt sich ein kostengünstiger Aufbau.

Ferner kann die Maschinenausgangswelle als relativ lange und biegeweiche Welle ausgeführt werden. Hierdurch kann sich ein mit der Maschinenausgangswelle verbundenes Eingangsglied des Getriebes jeweils optimal ausrichten.

Von besonderem Vorzug ist es, wenn das Getriebe einen Planetenradsatz aufweist, wobei ein erstes Glied des Planetenradsatzes das Eingangsglied bildet.

Durch einen Planetenradsatz können relativ hohe Drehzahlen der elektrischen Maschine auf relativ geringe Antriebsdrehzahlen für das angetriebene Rad umgesetzt werden, wobei in axialer und radialer Richtung nur ein kleiner Bauraum notwendig ist. Vorzugsweise weist das Getriebe nur einen einzelnen Planetenradsatz auf, der eine feste Übersetzung zwischen der Maschinenausgangswelle und der Antriebswelle einrichtet.

Dabei ist es von besonderem Vorzug, wenn das erste Glied des Planetenradsatzes ein Sonnenrad ist.

Das Sonnenrad kann an der Maschinenausgangswelle angebracht werden oder einstückig hiermit ausgebildet sein.

Ferner ist es bevorzugt, wenn ein zweites Glied des Planetenradsatzes drehbar an einem Getriebegehäuse gelagert ist, das starr mit dem Maschinengehäuse verbunden ist.

Von besonderem Vorzug ist es hierbei, wenn das zweite Glied des Planetenradsatzes mittels eines einzelnen Lagers drehbar an dem Getriebegehäuse gelagert ist.

Das einzelne Lager kann ein relativ groß dimensioniertes doppelreihiges Wälzlager sein, beispielsweise ein Schrägkugellager.

Besonders bevorzugt ist es, wenn das einzelne Lager das einzige Lager zur Drehlagerung des Planetenradsatzes ist.

Ferner ist es vorteilhaft, wenn sich das zweite Glied des Planetenradsatzes aus dem Getriebegehäuse heraus erstreckt und mit der Antriebswelle verbindbar ist.

Bei dieser Ausführungsform liefert die Lagerung des zweiten Gliedes auch eine Lagerstelle für die Antriebswelle.

Vorzugsweise ist das zweite Glied des Planetenradsatzes ein Planetenträger, an dem eine Mehrzahl von Planetenrädern drehbar gelagert ist.

Ferner ist es vorteilhaft, wenn ein erster sich aus dem Maschinengehäuse heraus erstreckender Abschnitt der Maschinenausgangswelle, der mit dem ersten Glied des Planetenradsatzes verbunden ist, über das zweite Glied des Planetenradsatzes radial gelagert ist.

Bei dieser Ausführungsform erfolgt die Lagerung der Maschinenausgangswelle zum einen unmittelbar über die Lagerung des ersten Rotorlagerabschnittes und zum anderen mittelbar über das zweite Glied des Planetenradsatzes.

Daher sind für die elektrische Maschinenanordnung nur drei Lager notwendig, nämlich zwei Lager zur Lagerung des ersten und des zweiten Rotorlagerabschnittes sowie ein einzelnes Lager zur Lagerung des Planetenradsatzes.

Ferner ist es insgesamt bevorzugt, wenn ein drittes Glied des Planetenradsatzes fest mit dem Maschinengehäuse und/oder einem Getriebegehäuse verbunden ist, das starr mit dem Maschinengehäuse verbunden ist.

Auf diese Weise kann eine feste Übersetzung des Planetenradsatzes eingerichtet werden.

Dabei ist es von besonderem Vorzug, wenn das dritte Glied des Planetenradsatzes ein Hohlrad ist.

Hierdurch kann sich eine radial und axial kompakte Bauform realisieren lassen.

Insgesamt ist es ferner bevorzugt, wenn ein zweiter sich aus dem Maschinengehäuse heraus erstreckender Abschnitt der Maschinenausgangswelle und/oder des ersten Radiallagerabschnittes mit einer Sensoranordnung verbunden ist.

Die Sensoranordnung beinhaltet üblicherweise einen Inkrementalgeber oder ähnliches, um die Position bzw. die Drehzahl des Rotors zu erfassen. Die Sensoranordnung ist dabei außerhalb des Maschinengehäuses angeordnet, und zwar an dem zweiten Abschnitt der Maschinenausgangswelle bzw. an dem hiermit verbundenen Radiallagerabschnitt.

Gemäß einer weiteren insgesamt bevorzugten Ausführungsform weist das Maschinengehäuse einen ersten Lagerdeckel, an dem der erste Radiallagerabschnitt gelagert ist, und einen zweiten Deckel auf, an dem der zweite Radiallagerabschnitt gelagert ist.

Die Lagerdeckel können relativ massiv ausgebildet sein, um die auftretenden Kräfte aufnehmen zu können.

Das dritte Glied des Planetenradsatzes ist bevorzugt von außen an dem zweiten Lagerdeckel festgelegt.

Ferner ist es hierbei bevorzugt, wenn das Maschinengehäuse einen Zylinderabschnitt aufweist, der die beiden Lagerdeckel miteinander verbindet.

Auf diese Weise kann das Maschinengehäuse kostengünstig aufgebaut werden. Der Zylinderabschnitt muss dabei nicht notwendigerweise hochfest ausgebildet sein.

Bevorzugt ist es hierbei jedoch, wenn der Stator an dem Zylinderabschnitt angeordnet ist und wenn der Zylinderabschnitt wenigstens einen Hohlraum aufweist, der von einem Kühlfluid durchströmbar ist.

Auf diese Weise kann eine Kühlung der elektrischen Maschine auf konstruktiv einfache Weise realisiert werden.

Ferner ist es insgesamt vorteilhaft, wenn das Getriebe in einem Getriebegehäuse aufgenommen ist, in dem ein Ölsumpf zur Tauchschmierung des Getriebes und/oder eines Lagers vorhanden ist, mittels dessen ein Glied des Getriebes an dem Getriebegehäuse gelagert ist.

Bei dieser Ausführungsform kann das Getriebegehäuse beispielsweise gebildet sein durch den zweiten Lagerdeckel, aus dem sich ein Abschnitt der Getriebe- bzw. Maschinenausgangswelle heraus erstreckt, und durch einen Getriebegehäusedeckel, der fluiddicht mit dem zweiten Lagerdeckel verbunden ist.

Durch das Bereitstellen eines Ölsumpfes ist eine aufwändige Einspritzschmierung nicht notwendig. Ferner kann mittels des Ölsumpfes auch das vorzugsweise einzige Lager geschmiert werden, mittels dessen das zweite Glied des Planetenradsatzes an dem Getriebegehäuse gelagert ist.

Bei der elektrischen Achse, die zwei derartige elektrische Maschinenanordnungen aufweist, ist es von besonderem Vorzug, wenn diese so angeordnet sind, dass deren jeweilige Getriebe axial außen angeordnet sind.

Die Getriebe sind dabei jeweils bevorzugt außen an dem zweiten Lagerdeckel angeordnet.

Zwar wäre auch denkbar, die Getriebe axial innen, also unmittelbar benachbart zueinander anzuordnen. Die Anordnung axial außen hat jedoch auch den Vorteil, dass die Verbindung mit dem Rotor über eine relativ lange Maschinenausgangswelle erfolgen kann, die so biegeweich ist, dass sich ein damit verbundenes Glied des Getriebes immer optimal ausrichten kann. Des Weiteren können bei einer außen liegenden Getriebeanordnung die Getriebeausgangswellen auf direktem Wege aus den Getriebegehäusen herausgeführt werden und müssen nicht durch die Motorwellen hindurchgeführt werden. Hierdurch können die Motorwellenlager im Durchmesser klein gehalten werden (gut für hohe Drehzahlen) und die Getriebeausgangswellen können ausreichend dimensioniert werden (keine Durchmesserbegrenzung infolge der maximal zulässigen Lagerdurchmesser).

Ferner ist es bei der elektrischen Achse erfindungsgemäß, daß die Maschinengehäuse der Maschinenanordnungen jeweils einen ersten Lagerdeckel aufweisen, die miteinander verbunden sind.

Durch Verbindung der Lagerdeckel miteinander kann die elektrische Achse als vormontierte Einheit bereitgestellt werden.

Dabei ist es erfindungsgemäß, daß die ersten Lagerdeckel der Maschinenanordnungen einen Sensorraum einschließen, in dem jeweilige Sensoranordnungen der Maschinenanordnungen aufgenommen sind.

Die Sensoranordnungen liegen zum einen geschützt durch die Lagerdeckel und axial getrennt von dem Getriebe. Ferner ist eine elektrische Verbindung mit einer Steuereinrichtung relativ leicht zu realisieren, da im Wesentlichen nur ein elektrischer Anschluss hierfür erforderlich ist.

Daher ist es von besonderem Vorzug, wenn die ersten Lagerdeckel der Maschinenanordnungen wenigstens einen elektrischen Anschluss zur elektrischen Versorgung der elektrischen Maschinenanordnungen aufweisen.

Die elektrische Versorgung kann dabei zur Bestromung der Statoren dienen. Mit elektrischer Versorgung ist jedoch auch der Betrieb der jeweiligen Sensoranordnungen gemeint und die Möglichkeit, Sensorsignale abzugreifen, die dann einer externen Steuereinheit zugeführt werden können.

Gemäß einer weiteren bevorzugten Ausführungsform ist in einem Getriebegehäuse von nur einer der zwei Maschinenanordnungen eine Parksperrenanordnung aufgenommen.

Eine derartige einseitige Parksperre ist für die meisten Einsatzgebiete hinreichend. Dabei wird mittels der Parksperrenanordnung vorzugsweise die Getriebeausgangswelle bzw. die Antriebswelle gegen das Getriebegehäuse gesperrt.

Von besonderem Vorzug ist es daher, wenn die Parksperrenanordnung ein Parksperrenrad aufweist, das an einem zweiten Glied des Getriebes festgelegt ist, insbesondere an dem Planetenträger.

Die erfindungsgemäße elektrische Maschinenanordnung ist vorzugsweise nicht schaltbar.

Ferner ist die elektrische Maschine der elektrischen Maschinenanordnung bevorzugt als Innenläufer ausgebildet. Das Getriebe bzw. der Planetenradsatz ist bevorzugt koaxial zu der elektrischen Maschine angeordnet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeuges mit einer erfindungsgemäßen elektrischen Achse;
- Fig. 2: eine Längsschnittansicht durch eine weitere Ausführungsform einer erfindungsgemäßen elektrischen Achse.

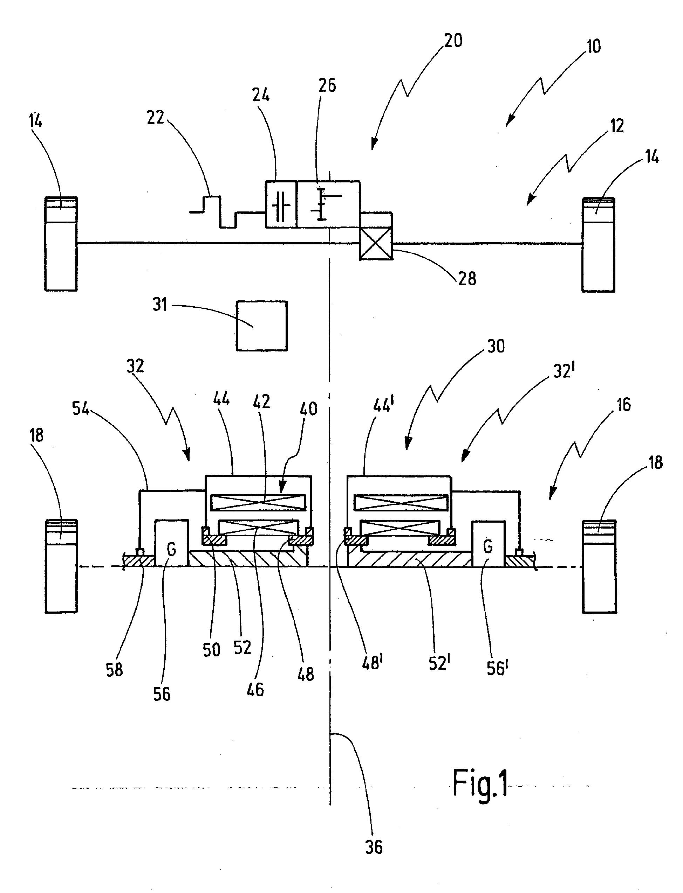

In Fig. 1 ist ein Kraftfahrzeug schematisch dargestellt und mit 10 bezeichnet. Das Kraftfahrzeug 10 weist eine erste Achse 12 auf, mit der zwei Räder 14 antreibbar sind. Ferner beinhaltet das Kraftfahrzeug eine zweite Achse 16, die als elektrische Achse ausgebildet und dazu ausgelegt ist, zwei Räder 18 anzutreiben.

Der ersten Achse 12 ist eine erste Antriebseinheit 20 zugeordnet. Die erste Antriebseinheit 20 beinhaltet einen Verbrennungsmotor 22, eine Kupplungsanordnung 24 sowie ein Getriebe 26 wie ein Stufengetriebe. Ferner weist die erste Antriebseinheit 20 ein mechanisches Differential 28 auf, das die Antriebsleistung auf die zwei Räder 14 verteilt.

Die zweite Achse 16 weist eine zweite Antriebseinheit 30 auf. Die zwei Antriebseinheiten 20, 30 sind mechanisch nicht miteinander verbunden, werden jedoch mittels einer übergeordneten Steuereinrichtung 31 angesteuert. Die zweite Achse 16 kann dabei dazu ausgelegt sein, einen Allradbetrieb einzurichten. Die zweite Achse kann auch als alleiniger Fahrzeugantrieb vorgesehen sein.

Die zweite Antriebseinheit 30 weist eine erste Maschinenanordnung 32 sowie eine zweite Maschinenanordnung 32' auf. Die zwei Maschinenanordnungen 32, 32' sind im Wesentlichen spiegelbildlich in Bezug auf eine Längsachse 36 des Fahrzeugs angeordnet.

Die zwei Maschinenanordnungen 32 sind über die Steuereinrichtung 31 unabhängig voneinander ansteuerbar. Die Maschinenanordnungen 32, 32' sind dabei jeweils mit einem der zwei Räder 18 verbunden. Ein mechanisches Differential zum Drehzahlausgleich zwischen den zwei Rädern 18 ist bei dieser Anordnung nicht notwendig.

Im Folgenden werden die Maschinenanordnungen im Wesentlichen anhand der ersten Maschinenanordnung 32 erläutert. Die folgende Beschreibung ist jedoch in gleiche Weise auch auf die zweite Maschinenanordnung 32' anwendbar.

Die Maschinenanordnung 32 weist eine elektrische Maschine 40 auf. Die elektrische Maschine 40 beinhaltet einen Stator 42, der an einem Maschinengehäuse 44 festlegt ist. Ferner beinhaltet die elektrische Maschine 40 einen Rotor 46, der über einen ersten Rotorlagerabschnitt 48 sowie einen zweiten Rotorlagerabschnitt 50 an dem Maschinengehäuse 44 drehbar gelagert ist.

Der erste Rotorlagerabschnitt 48 ist mit einer Maschinenausgangswelle 52 verbunden. Die Maschinenausgangswelle 52 erstreckt sich von dem ersten Rotorlagerabschnitt 48 berührungsfrei durch den zweiten Rotorlagerabschnitt 50 hindurch aus dem Maschinengehäuse 44 heraus. Benachbart zu dem Maschinengehäuse 44 ist ein Getriebegehäuse 54 angeordnet, in das sich die Maschinenausgangswelle 52 hinein erstreckt und dort mit einem Eingangsglied des Getriebes verbunden ist. Das Getriebe 56 weist ferner eine Ausgangswelle 58 auf, die sich aus dem Getriebegehäuse 54 heraus erstreckt und mit einer nicht näher bezeichneten, gegebenenfalls jedoch einstückig hiermit ausgebildeten Antriebswelle 58 verbunden ist, die mit dem zugeordneten Rad 18 verbunden ist.

Die Maschinenanordnungen 32, 32' sind koaxial zueinander und zu der zweiten Achse 16 angeordnet. Auch die Getriebe 56, 56' sind koaxial zu der zweiten Achse 16 angeordnet. Die ersten Rotorlagerabschnitte 48, 48', die jeweils mit der zugeordneten Maschinenausgangswelle 52, 52' verbunden sind, sind benachbart zueinander angeordnet. Demzufolge erstrecken sich die Maschinenausgangswellen 52, 52' jeweils von einer zentralen Lage im Bereich der Längsachse 36 des Fahrzeugs in axialer Richtung hin zu den jeweiligen Rädern 18.

Die Maschinenausgangswellen 52, 52' sind dabei an ihrem aus dem Maschinengehäuse 44 herausragenden Ende mittelbar über das damit verbundene Getriebe 56, 56' gelagert. Auf diese Weise können die Ausgangswellen 52, 52' jeweils relativ lang und damit biegeweich ausgebildet sein. Demzufolge kann eine relativ optimale Anbindung der Maschinenausgangswellen 52, 52' an die jeweiligen Getriebe 56, 56' erfolgen, insbesondere eine optimale Ausrichtung.

Da die Getriebe 56, 56' in axialer Richtung (d.h. quer zur Längsachse des Fahrzeugs 36) jeweils außen angeordnet sind, kann zumindest einem der Getriebe 56, 56' auf relativ einfache Weise eine Parksperrenanordnung zugeordnet werden, die zudem relativ einfach betätigbar ist.

Ferner kann das Lagerkonzept der Maschinenanordnungen 32, 32' jeweils optimal ausgestaltet werden. Im Idealfall sind nur zwei Lager zur Lagerung der jeweiligen Rotorlagerabschnitte 48, 50 sowie ein Lager zur Lagerung des Getriebes 56 bzw. des damit verbundenen Endes der Maschinenausgangswelle 52 erforderlich.

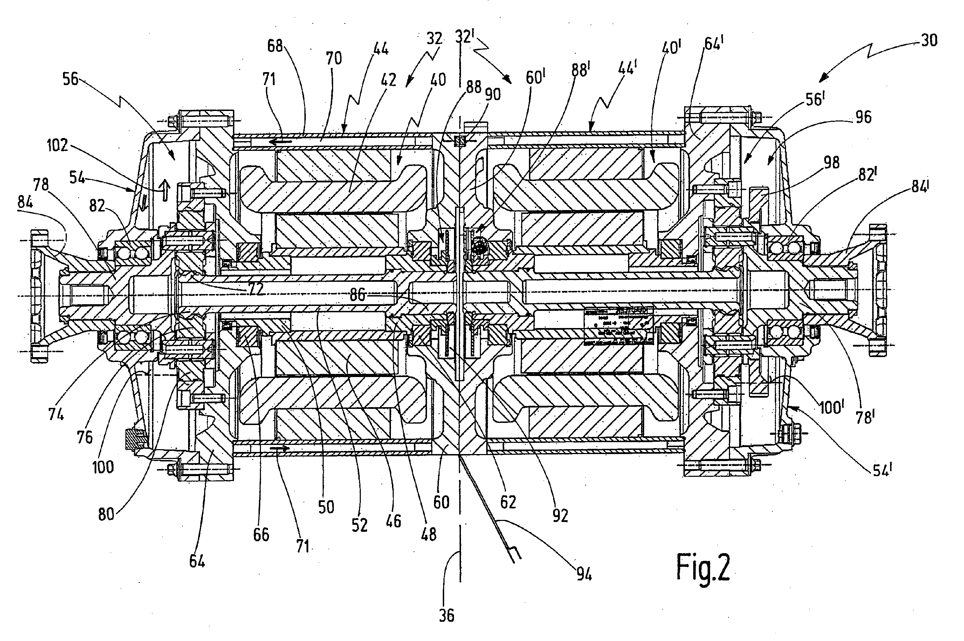

Im Folgenden wird eine bevorzugte Ausführungsform einer solchen elektrischen Antriebseinheit 30 anhand der Fig. 2 erläutert. Der grundsätzliche Aufbau und die grundsätzliche Funktion entsprechen dabei der oben beschriebenen zweiten Antriebseinheit 30. Gleiche Elemente sind daher mit gleichen Bezugsziffern versehen. Im Folgenden werden im Wesentlichen die Unterschiede erläutert.

Das Maschinengehäuse 44 der ersten Maschinenanordnung 32 (auf die der Einfachheit halber zunächst ausschließlich Bezug genommen wird) weist einen ersten Lagerdeckel 60 auf, der radial ausgerichtet ist und an dem ein erstes Lager 62 zur Lagerung des ersten Rotorlagerabschnittes 48 festgelegt ist. Ferner weist das Maschinengehäuse 44 einen zweiten Lagerdeckel 64 auf, an dem ein zweites Lager 66 zur Lagerung des zweiten Rotorlagerabschnittes 50 gelegt ist. Zwischen den zwei Lagerdeckeln 60, 64 erstreckt sich ein Zylinderabschnitt 68, an dem der Stator 42 festgelegt ist. Der Zylinderabschnitt 68 weist einen Hohlraum auf, durch ein Kühlfluid 71 hindurchgeführt werden kann, wie es in Fig. 2 schematisch durch Pfeile angedeutet ist. Über das Kühlfluid 71 kann die elektrische Maschine 40 gekühlt werden, insbesondere dessen Stator 42.

Die Maschinenausgangswelle 52 weist einen ersten Abschnitt 72 auf, der sich aus dem Maschinengehäuse 44 heraus erstreckt, und zwar durch eine Öffnung des zweiten Lagerdeckels 64 hindurch. Der erste Abschnitt 72 der Maschinenausgangswelle 52 ist mit einem Eingangsglied 74 des Getriebes 56 verbunden. Das Getriebe 56 ist vorliegend als einzelner Planetenradsatz ausgebildet. Im vorliegenden Fall bildet ein Sonnenrad 74 des Planetenradsatzes das Eingangsglied des Getriebes 56. Das Sonnenrad 74 ist starr mit der Maschinenausgangswelle 52 verbunden oder einstückig hiermit ausgebildet.

Der Planetenradsatz weist ferner einen Planetenträger 78 auf, an dem eine Mehrzahl von Planetenrädern 76 drehbar gelagert sind. Ferner beinhaltet der Planetenradsatz ein Hohlrad 80, das gehäusefest ausgebildet ist. Genauer gesagt ist das Hohlrad 80 an einer Außenseite des zweiten Lagerdeckels 64 festgelegt.

Der Planetenträger weist ausgehend von den Planetenrädern 76 einen sich nach außen erstreckenden Fortsatz auf, der über ein drittes Lager 82 gelagert ist. Genauer gesagt ist das dritte Lager 82 an einem Getriebegehäuse 54 festgelegt, das im Wesentlichen deckelartig ausgebildet ist und mit dem zweiten Lagerdeckel 64 zur Bildung eines umschlossenen Getrieberaumes verbunden ist. Das dritte Lager 82 ist als doppelreihiges Wälzlager ausgebildet, insbesondere als Schrägkugellager. Das sich aus dem Maschinengehäuse 44 heraus erstreckende Ende der Maschinenausgangswelle 52 ist über den Planetenradsatz mittelbar ebenfalls an dem dritten Lager 82 gelagert.

Der sich nach außen erstreckende Fortsatz des Planetenträgers 78 erstreckt sich aus dem Getriebegehäuse 54 heraus und ist mit einem Abtriebsflansch 84 verbunden, der mit einer Antriebswelle verbindbar ist, die mit dem zugeordneten angetriebenen Rad 18 verbindbar ist.

Ein zweiter Abschnitt 86 der Maschinenausgangswelle 52 erstreckt sich aus dem Maschinengehäuse 44 heraus, und zwar durch eine Öffnung in dem ersten Lagerdeckel 60 hindurch. Der erste Lagerdeckel 60 weist dabei eine axiale Ausnehmung auf, in die hinein sich der zweite Abschnitt 86 erstreckt. An dem zweiten Abschnitt 86 der Maschinenausgangswelle 52 bzw. an dem zugeordneten ersten Rotorlagerabschnitt 48 ist eine Sensoranordnung 88 vorgesehen. Die Sensoranordnung 88 kann beispielsweise zur Erfassung der Drehstellung bzw. der Drehzahl der Maschinenausgangswelle 52 ausgelegt sein. Vorzugsweise ist die Sensoranordnung 88 in der axialen Ausnehmung des ersten Lagerdeckels 60 angeordnet, derart, dass die Sensoranordnung 88 in axialer Richtung nicht über die axiale Stirnseite des ersten Lagerdeckels 60 hinausragt.

Wie es in Fig. 2 ferner gezeigt ist, sind die zwei ersten Lagerdeckel 60, 60' der zwei Maschinenanordnungen 32, 32' mittels einer schematisch angedeuteten Flanschverbindung 90 unmittelbar miteinander verbunden, derart, dass deren jeweilige axiale Ausnehmungen einen Sensorraum 92 definieren, in dem die Sensoranordnungen 88 88' der zwei Maschinenanordnungen 32, 32' aufgenommen sind.

Ferner ist an wenigstens einem der ersten Lagerdeckel 60, 60' im Bereich der Flanschverbindung 90 ein elektrischer, in Fig. 2 nur schematisch angedeuteter Anschluss 94 vorgesehen. Dieser kann zur Stromversorgung der elektrischen Maschinen 40, 40' dienen sowie zum Betrieb der Sensoranordnungen 88, 88'. Ferner kann über den elektrischen Anschluss 94 ein Sensorsignal zur Übergabe an eine Steuereinrichtung 31 herausgeführt werden.

Wie oben erwähnt, sind die zwei Maschinenanordnungen 32, 32' generell identisch aufgebaut und spiegelsymmetrisch in Bezug auf eine Längsachse 36 des Fahrzeugs (oder einer Achse parallel hierzu) angeordnet. Zur Einrichtung einer Parksperrenfunktion ist jedoch nur in einem der zwei Getriebegehäuse 54, 54', nämlich in dem Getriebegehäuse 54' eine Parksperrenanordnung 96 vorgesehen. Die Parksperrenanordnung 96 weist in an sich bekannter Weise ein Parksperrenrad 98 auf, das im vorliegenden Fall an dem Planetenträger 78' festgelegt ist. Ferner weist die Parksperrenanordnung 96, obgleich dies in Fig. 2 nicht dargestellt ist, eine Klinke oder ähnliches auf, die dazu ausgelegt ist, zum Einrichten der Parksperrenfunktion in eine Verzahnung des Parksperrenrades 98 zu greifen. Die Klinke ist dabei an der Außenseite des zweiten Lagerdeckels 64' oder an dem Getriebegehäuse 54' verschwenkbar festgelegt.

Die Getriebe 56, 56' und die zugeordneten dritten Lager 82, 82' können ohne Ölpumpe durch Tauchschmierung mit Schmiermittel versorgt werden. Zu diesem Zweck ist in den Getriebegehäusen 54, 54' jeweils ein Ölsumpf 100 vorgesehen, in den zumindest ein bewegliches Teil des Planetenradsatzes ragt, beispielsweise jeweils einer der Planetenräder bzw. das Parksperrenrad 98. Durch das jeweils eintauchende Getriebeelement wird Öl aus dem Ölsumpf 100 hochgeschleudert, wie es bei 102 gezeigt ist, tropft an der Innenwand des Außenabschnittes des Getriebegehäuses 54 ab und wird von dort über geeignete Öffnungen (nicht dargestellt) auf die axial äußere Seite des dritten Lagers 82 geführt. Anschließend wird das Öl in axialer Richtung nach innen durch das dritte Lager 82 hindurchgeführt und in den Planetenträger hinein, um über diesen die Planetenräder 76 von innen zu schmieren. Zu diesem Zweck ist der Planetenträger so ausgestaltet, dass er eine Schulter des Getriebegehäuses 54 übergreift, um zu vermeiden, dass Öl zwischen dem dritten Lager 82 und dem Planetenträger 78 wieder radial nach außen weggeschleudert wird.

## Patentansprüche

1. Elektrische Achse (16) für ein Kraftfahrzeug (10), mit zwei im Wesentlichen spiegelbildlich zueinander angeordneten elektrischen Maschinenanordnungen (32, 32'), die jeweils eine elektrische Maschine (40, 40'), die über ein Getriebe (56, 56') mit wenigstens einer Antriebswelle verbunden ist, die mit einem angetriebenen Rad (18) des Kraftfahrzeugs (10) verbindbar ist, und ein Maschinengehäuse (44, 44') beinhalten, wobei die elektrischen Maschinen (40, 40') jeweils einen gehäusefesten Stator (42) und einen Rotor (46) aufweisen, der mit einem Eingangsglied (74) des jeweiligen Getriebes verbunden ist, wobei die Rotoren (46, 46') jeweils mittels eines ersten und eines zweiten Rotorlagerabschnittes (48, 50, 48', 50') an dem Maschinengehäuse (44) drehbar gelagert sind, wobei die ersten Rotorlagerabschnitte (48, 48') jeweils mit einer Maschinenausgangswelle (52, 52') verbunden sind, die mit dem Eingangsglied (74) des jeweiligen Getriebes (56, 56') verbunden ist, und wobei die Maschinenausgangswellen (52, 52') berührungsfrei durch den zweiten jeweiligen zweiten Rotorlagerabschnitt (50, 50') hindurch geführt sind,
**dadurch gekennzeichnet, dass**
die Maschinengehäuse (44, 44') der Maschinenanordnungen (32, 32') jeweils einen ersten Lagerdeckel (60, 60') aufweisen, die miteinander verbunden sind, wobei die ersten Lagerdeckel (60, 60') der Maschinenanordnungen (32, 32') einen Sensorraum (92) einschließen, in dem jeweilige Sensoranordnungen (88, 88') der Maschinenanordnungen (32, 32') aufgenommen sind.

2. Elektrische Achse nach Anspruch 1, wobei die Getriebe (56, 56') einen Planetenradsatz aufweisen, wobei ein erstes Glied (74) des jeweiligen Planetenradsatzes das Eingangsglied des jeweiligen Getriebes bildet.

3. Elektrische Achse nach Anspruch 2, wobei das erste Glied ein Sonnenrad (74) des Planetenradsatzes ist.

4. Elektrische Achse nach Anspruch 2 oder 3, wobei ein zweites Glied (78) des jeweiligen Planetenradsatzes drehbar an einem jeweiligen Getriebegehäuse (54, 54') drehbar gelagert ist, das starr mit dem jeweiligen Maschinengehäuse (44, 44') verbunden ist.

5. Elektrische Achse nach einem der Ansprüche 2 bis 4, wobei ein drittes Glied (80) des jeweiligen Planetenradsatzes fest mit dem jeweiligen Maschinengehäuse (44, 44') und/oder mit einem jeweiligen Getriebegehäuse (54, 54') verbunden ist, das starr mit dem Maschinengehäuse (44, 44') verbunden ist.

6. Elektrische Achse nach Anspruch 5, wobei das dritte Glied ein Hohlrad (80) des Planetenradsatzes ist.

7. Elektrische Achse nach einem der Ansprüche 1 bis 6, wobei ein zweiter sich aus dem jeweiligen Maschinengehäuse (44, 44') heraus erstreckender Abschnitt (86) der jeweiligen Maschinenausgangswelle (52, 52') und/oder des jeweiligen ersten Rotorlagerabschnittes (48, 48') mit der jeweiligen Sensoranordnung (88, 88') verbunden ist.

8. Elektrische Achse nach einem der Ansprüche 1 bis 7, wobei die Maschinengehäuse (44, 44') jeweils den ersten Lagerdeckel (60, 60'), an dem der jeweilige erste Rotorlagerabschnitt (48, 48') gelagert ist, und einen zweiten Lagerdeckel (64, 64') aufweisen, an dem der jeweilige zweite Rotorlagerabschnitt (50, 50') gelagert ist.

9. Elektrische Achse nach einem der Ansprüche 1 bis 8, wobei die Getriebe (56, 56') in einem jeweiligen Getriebegehäuse (54) aufgenommen sind, in dem ein Ölsumpf (100) zur Tauchschmierung des Getriebes (56, 56') und/oder eines Lagers (82) vorhanden ist, mittels dessen ein Glied (78) des Getriebes (56, 56') an dem Getriebegehäuse (54) gelagert ist.

10. Elektrische Achse nach einem der Ansprüche 1 bis 9, wobei die elektrischen Maschinenanordnungen (32, 32') so angeordnet sind, dass deren jeweilige Getriebe (56, 56') axial außen angeordnet sind.

11. Elektrische Achse nach einem der Ansprüche 1 bis 10, wobei die ersten Lagerdeckel (60, 60') der Maschinenanordnungen (32, 32') wenigstens einen elektrischen Anschluss (94) zur elektrischen Versorgung der elektrischen Maschinenanordnungen (32, 32') aufweisen.

12. Elektrische Achse nach einem der Ansprüche 1 bis 11, wobei in einem Getriebegehäuse (54') von nur einer der zwei Maschinenanordnungen (32, 32') eine Parksperrenanordnung (96) aufgenommen ist.

## Claims

1. Electric axle (16) for a motor vehicle (10), having two electric machine arrangements (32, 32') which are arranged in an essentially mirror-inverted fashion with respect to one another, and which each have an electric machine (40, 40') which are connected via a gearbox (56, 56') to at least one drive shaft which can be connected to a driven wheel (18) of the motor vehicle (10), and each have a machine housing (44, 44'), wherein the electric machines (40, 40') each have a stator (42) fixed to the housing and a rotor (46) which is connected to an input element (74) of the respective gearbox, wherein the rotors (46, 46') are each rotatably mounted on the machine housing (44) by means of a first and a second rotor bearing section (48, 50, 48', 50'), wherein the first rotor bearing sections (48, 48') are each connected to a machine output shaft (52, 52') which is connected to the input element (74) of the respective gearbox (56, 56'), and wherein the machine output shafts (52, 52') are guided through the respective second rotor bearing section (50, 50') in a contactless fashion,
**characterized in that**
the machine housings (44, 44') of the machine arrangements (32, 32') each have a first bearing cover (60, 60') which are connected to one another, wherein the first bearing covers (60, 60') of the machine arrangements (32, 32') enclose a sensor space (92) in which respective sensor arrangements (88, 88') of the machine arrangements (32, 32') are accommodated.

2. Electric axle according to Claim 1, wherein the gearboxes (56, 56') have a planetary gearwheel set, wherein a first element (74) of the respective planetary gearwheel set forms the input element of the respective gearbox.

3. Electric axle according to Claim 2, wherein the first element is a sun gear (74) of the planetary gearwheel set.

4. Electric axle according to Claim 2 or 3, wherein a second element (78) of the respective planetary gearwheel set is rotatably mounted on a respective gearbox housing (54, 54') which is rigidly connected to the respective machine housing (44, 44').

5. Electric axle according to one of Claims 2 to 4, wherein a third element (80) of the respective planetary gearwheel set is securely connected to the respective machine housing (44, 44') and/or to a respective gearbox housing (54, 54') which is rigidly connected to the machine housing (44, 44').

6. Electric axle according to Claim 5, wherein the third element is a ring gear (80) of the planetary gearwheel set.

7. Electric axle according to one of Claims 1 to 6, wherein a second section (86), extending out of the respective machine housing (44, 44'), of the respective machine output shaft (52) and/or of the respective first rotor bearing section (48, 48') is connected to a respective sensor arrangement (88, 88').

8. Electric axle according to one of Claims 1 to 7, wherein the machine housings (44, 44') each have a first bearing cover (60, 60'), on which the respective first rotor bearing section (48, 48') is mounted, and a second bearing cover (64, 64'), on which the respective second rotor bearing section (50, 50') is mounted.

9. Electric axle according to one of Claims 1 to 8, wherein the gearboxes (56, 56') are accommodated in a respective gearbox housing (54, 54') in which an oil sump (100) for splash lubrication of the gearbox (56, 56') and/or of a bearing (82) is present, by means of which bearing (82) an element (78) of the gearbox (56, 56') is mounted on the gearbox housing (54).

10. Electric axle according to any of Claims 1 to 9, wherein the electric machine arrangements (32, 32') are arranged in such a way that their respective gearboxes (56, 56') are arranged axially on the outside.

11. Electric axle according to any of Claims 1 to 10, wherein the first bearing covers (60, 60') of the machine arrangements (32, 32') have at least one electrical connection (94) for electrically supplying the electric machine arrangements (32, 32').

12. Electric axle according to one of Claims 1 to 11 wherein a parking lock arrangement (96) is accommodated in a gearbox housing (54') of only one of the two machine arrangements (32, 32').

## Revendications

1. Essieu électrique (16) pour un véhicule automobile (10), comprenant deux agencements de moteurs électriques (32, 32') disposés essentiellement avec une symétrie miroir l'un par rapport à l'autre, lesquels comprennent chacun un moteur électrique (40, 40') qui est connecté par le biais d'une transmission (56, 56') à au moins un arbre d'entraînement qui peut être connecté à une roue motrice (18) du véhicule automobile (10), et un carter de moteur (44, 44'), les moteurs électriques (40, 40') présentant chacun un stator (42) fixé au carter et un rotor (46) qui est connecté à un organe d'entrée (74) de la transmission respective, les rotors (46, 46') étant montés à rotation à chaque fois au moyen d'une première et d'une deuxième portion de palier de rotor (48, 50, 48', 50') sur le carter de moteur (44), les premières portions de palier de rotor (48, 48') étant connectées à chaque fois à un arbre de sortie de moteur (52, 52') qui est connecté à l'organe d'entrée (74) de la transmission respective (56, 56'), et les arbres de sortie de moteur (52, 52') étant guidés sans contact à travers la deuxième portion de palier de rotor respective (50, 50'),
**caractérisé en ce que**
les carters de moteur (44, 44') des agencements de moteurs (32, 32') présentent chacun un premier couvercle de palier (60, 60'), lesdits couvercles de palier étant connectés l'un à l'autre, les premiers couvercles de palier (60, 60') des agencements de moteurs (32, 32') renfermant un espace de capteur (92) dans lequel sont reçus des agencements de capteur respectifs (88, 88') des agencements de moteurs (32, 32').

2. Essieu électrique selon la revendication 1, dans lequel les transmissions (56, 56') présentent un train planétaire, un premier organe (74) du train planétaire respectif formant l'organe d'entrée de la transmission respective.

3. Essieu électrique selon la revendication 2, dans lequel le premier organe est une roue solaire (74) du train planétaire.

4. Essieu électrique selon la revendication 2 ou 3, dans lequel un deuxième organe (78) du train planétaire respectif est monté à rotation sur un carter de transmission respectif (54, 54') qui est connecté rigidement au carter de moteur respectif (44, 44').

5. Essieu électrique selon l'une quelconque des revendications 2 à 4, dans lequel un troisième organe (80) du train planétaire respectif est connecté fixement au carter de moteur respectif (44, 44') et/ou à un carter de transmission respectif (54, 54'), lequel est connecté rigidement au carter de moteur (44, 44').

6. Essieu électrique selon la revendication 5, dans lequel le troisième organe est une couronne dentée (80) du train planétaire.

7. Essieu électrique selon l'une quelconque des revendications 1 à 6, dans lequel une deuxième portion (86), s'étendant à partir du carter de moteur respectif (44, 44'), de l'arbre de sortie de moteur respectif (52, 52') et/ou de la première portion de palier de rotor respective (48, 48') est connectée à l'agencement de capteur respectif (88, 88').

8. Essieu électrique selon l'une quelconque des revendications 1 à 7, dans lequel les carters de moteur (44, 44') présentent à chaque fois le premier couvercle de palier (60, 60'), sur lequel est montée la première portion de palier de rotor respective (48, 48'), et un deuxième couvercle de palier (64, 64'), sur lequel est montée la deuxième portion de palier de rotor respective (50, 50').

9. Essieu électrique selon l'une quelconque des revendications 1 à 8, dans lequel les transmissions (56, 56') sont reçues dans un carter de transmission respectif (54), dans lequel est prévu un carter d'huile (100) pour la lubrification par immersion de la transmission (56, 56') et/ou d'un palier (82) au moyen duquel un organe (78) de la transmission (56, 56') est monté sur le carter de transmission (54).

10. Essieu électrique selon l'une quelconque des revendications 1 à 9, dans lequel les agencements de moteurs électriques (32, 32') sont disposés de telle sorte que leurs transmissions respectives (56, 56') soient disposées axialement à l'extérieur.

11. Essieu électrique selon l'une quelconque des revendications 1 à 10, dans lequel les premiers couvercles de palier (60, 60') des agencements de moteurs (32, 32') présentent au moins un raccord électrique (94) pour l'alimentation électrique des agencements de moteurs électriques (32, 32').

12. Essieu électrique selon l'une quelconque des revendications 1 à 11, dans lequel, dans un carter de transmission (54') d'au moins l'un des deux agencements de moteurs (32, 32'), est reçu un agencement de verrouillage de stationnement (96).
